# FASCICULE DE BREVET EUROPEEN

(11) **EP 0 519 822 B1**
(45) Date de publication et mention de la délivrance du brevet: **10.05.1995**
(21) Numéro de dépôt: 92401696.7
(22) Date de dépôt: 18.06.1992
(51) Int. Cl.: F02C 7/20, B64D 27/00, F01D 25/16

(54) **Structure de suspension arrière du carter d'échappement d'un turboréacteur**
Hinteraufhängungstruktur für einen Abgaskanal einer Strahlturbine
Suspension structure for a turbo engine exhaust casing

(30) Priorité: 19.06.1991 FR 9107515
(43) Date de publication de la demande: 23.12.1992
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Debeneix, Pierre, F-77930 Saint Sauveur sur Ecole (FR)

(56) Documents cités:
- EP-A- 0 431 800
- GB-A- 1 506 952
- GB-A- 2 129 501

## Description

L'invention concerne une structure de suspension arrière par laquelle le carter d'échappement d'un turboréacteur peut être suspendu au mât placé sous l'aile d'un avion.

L'accrochage d'un turboréacteur sous l'aile d'un avion s'effectue par l'intermédiaire d'un mât conçu pour assurer la transmission mécanique des efforts entre le turboréacteur et la structure de l'avion. Le turboréacteur est suspendu au mât en deux points définissant une suspension avant et une suspension arrière. La transmission des efforts de poussée s'effectue quant à elle au travers de barres de reprise de poussée inclinées situées de part et d'autre du turboréacteur.

La structure de suspension arrière comprend habituellement au moins trois oreilles ou chapes d'accrochage extérieures qui sont réalisées d'un seul tenant à la partie supérieure du carter d'échappement du turboréacteur. Ces oreilles permettent de fixer le carter d'échappement aux extrémités inférieures de trois biellettes de suspension dont les extrémités supérieures sont montées sur une structure d'accrochage en arc de cercle fixée directement sous le mât servant à supporter le turboréacteur.

Dans le cas où le carter d'échappement du turboréacteur présente en section la forme d'un polygone régulier dont les côtés sont formé par des plaques planes du carter, les axes géométriques des oreilles d'accrochage sont habituellement situés en des sommets de ce polygone. Une telle disposition, décrits dans le EP 431.800 permet de n'engendrer dans la structure des plaques planes attenantes aux oreilles d'accrochage que des efforts de suspension en traction ou en compression. Cela conduit à donner à l'épaisseur de ces plaques une valeur minimale qui serait insuffisante si le mode d'accrochage pouvait entraîner des efforts de flexion.

Les oreilles d'accrochage sont accrochées aux extrémités inférieures des biellettes de suspension par des axes de fixation orientés parallèlement à l'axe géométrique du turboréacteur. Cela conduit à former au droit de chacune des oreilles d'accrochage une partie en creux en forme de feston sur la surface extérieure du carter d'échappement du turboréacteur. La profondeur de cette partie en creux est d'autant plus grande que les charges à transmettre sont importantes, car le diamètre des axes de fixation est alors plus élevé.

Le carter d'échappement supporte un carter ou moyeu central par des bras inclinés par rapport à une direction radiale, raccordés aux sommets du polygone formé en section par le carter d'échappement. Ces bras définissent à l'intérieur de ce dernier des secteurs consécutifs dans lesquels sont canalisés les gaz issus de la chambre de combustion du turboréacteur. Les parties en creux formées au droit de chacune des oreilles d'accrochage ont donc pour effet de réduire la section d'écoulement des gaz d'échappement dans les secteurs correspondants. La perturbation ainsi engendrée par rapport à la veine d'écoulement théorique des gaz dans chaque secteur se traduit par une baisse de rendement du turboréacteur et par un accroissement de la consommation en carburant. Ces effets sont d'autant plus importants que la charge transmise au travers de chacune des oreilles d'accrochage est élevée.

Par ailleurs, les bras inclinés supportant le moyeu central sont d'inégales longueurs, selon qu'ils sont rattachés au carter d'échappement à l'emplacement d'une oreille d'accrochage, ou non. Cela introduit un déséquilibre lors des dilatations thermiques qui se produisent entre les différents régimes du turboréacteur.

Pour remédier à ces inconvénients, on peut déplacer les oreilles d'accrochage vers l'extérieur par rapport aux sommets du polygone formé en section par le carter d'échappement, comme l'illustre notamment le document GB-A-1 506 952. Cependant, les efforts engendrés par la suspension du turboréacteur introduisent alors des flexions locales dans les plaques planes formant le carter d'échappement, ce qui nécessite d'accroître les épaisseurs des plaques et, par conséquent, la masse du turboréacteur. On aboutit donc ainsi à un résultat inverse de celui recherché.

L'invention a précisément pour objet une structure de suspension arrière du carter d'échappement d'un turboréacteur dont la conception originale permet de préserver la continuité de la veine théorique d'écoulement des gaz d'échappement et d'améliorer la tenue mécanique de l'ensemble lors des dilatations thermiques, sans engendrer de contrainte de flexion locale dans les plaques du carter d'échappement et, par conséquent, sans engendrer d'augmentation de masse dans le turboréacteur.

Conformément à l'invention, ce résultat est obtenu au moyen d'une structure de suspension arrière d'un carter d'échappement de turboréacteur, formant en section un polygone régulier, ladite structure comportant au moins trois oreilles d'accrochage extérieures portées par le carter et étant caractérisée par le fait que chacune des oreilles d'accrochage est portée par un premier côté du polygone régulier formé en section par le carter, et située dans le plan substantiellement défini par les droites portées par deux deuxièmes côtés du polygone régulier adjacents à ce premier côté et par ce premier côté.

Dans une structure ainsi réalisée, les efforts supportés par les plaques du carter d'échappement matérialisant les côtés du polygone régulier formé en section par ce carter restent strictement limités à des efforts de traction et de compression. Cependant, la localisation des oreilles d'accrochage en face de certains des côtés du polygone, et non plus aux sommets de ce dernier, permet d'éviter que des parties en creux en forme de feston ne soient formées sur la surface extérieure du carter au droit de chacune des oreilles. Par conséquent, tous les secteurs délimités à l'intérieur du carter par deux bras consécutifs présentent exactement la même section, de telle sorte que la continuité de la veine théorique d'écoulement des gaz d'échappement est préservée sur toute la circonférence du carter. De plus, la position occupée par les oreilles d'accrochage conformément à l'invention permet de donner à tous les bras reliant le carter au moyeu central une longueur égale, ce qui assure une meilleur tenue mécanique de l'ensemble lors des dilatations thermiques.

De façon plus précise, chacune des oreilles d'accrochage comportant un trou de passage d'axe géométrique donné, pour un axe de suspension du carter, chacun de ces axes géométriques est situé à l'intersection des droites portées par deux deuxièmes côtés du polygone régulier.

Selon un mode de réalisation préféré de l'invention, les premiers côtés du polygone régulier formé en section par le carter, qui porte des oreilles d'accrochage consécutives, sont séparés par un seul deuxième côté de ce polygone.

On décrira maintenant, à titre d'exemple non limitatif, un mode de réalisation préféré de l'invention, en se référant aux dessins annexés, dans lesquels:
- la figure 1 est une vue de côté, en coupe partielle, illustrant de façon très schématique la suspension d'un turboréacteur sous une aile d'avion ;
- la figure 2 est une section prise selon la ligne II-II de la figure 1, illustrant à plus grande échelle la structure de suspension arrière conforme à l'invention ; et
- la figure 3 est une section comparable à la figure 2 illustrant encore à plus grande échelle la structure du carter d'échappement au voisinage des oreilles d'accrochage de ce carter.

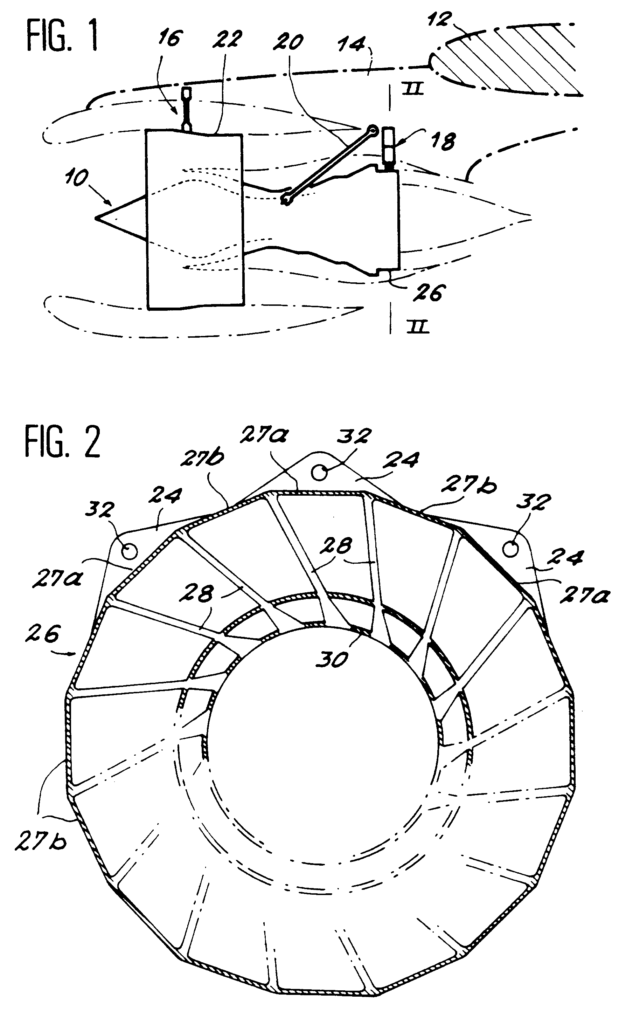

Sur la figure 1, on a représenté la suspension d'un turboréacteur 10 sous une aile d'avion 12 dont seule la partie avant est visible. Cette suspension est réalisée par l'intermédiaire d'un mât 14 qui fait saillie vers l'avant en dessous du bord d'attaque de l'aile 12.

Le turboréacteur 10 est suspendu au mât 14 par une structure de suspension avant 16 et par une structure de suspension arrière 18 autorisant le démontage du turboréacteur lorsque cela est nécessaire. La liaison entre le turboréacteur 10 et le mât 14 est complétée par des barres de reprise de poussée 20, situées de part et d'autre du turboréacteur et au travers desquelles l'effort de poussée exercé par le turboréacteur est transmis par le mât 14 à l'aile 12 de l'avion.

La structure de suspension avant 16 du turboréacteur 10 comprend habituellement des biellettes de suspension (non représentées), accrochées à la partie avant du mât 14 et dont les extrémités inférieures sont fixées sur le carter de soufflante 22.

La structure de suspension arrière 18, qui fait l'objet de la présente invention, comporte de façon connue une structure d'accrochage en arc de cercle (non représentée) fixée sur le mât 14 et des biellettes de suspension (non représentées), généralement au nombre de trois, dont les extrémités supérieures sont montées par des axes sur la structure d'accrochage en arc de cercle et dont les extrémités inférieures sont montées par des axes sur des oreilles ou chapes d'accrochage 24, fabriquées d'un seul tenant avec le carter d'échappement 26 du turboréacteur 10, comme l'illustre la figure 2.

Le carter d'échappement 26 du turboréacteur est un carter monobloc, qui présente en section la forme d'un polygone régulier comportant seize sommets dans l'exemple représenté. Les côtés de ce polygone régulier sont matérialisés par des plaques planes successives 27a, 27b du carter d'échappement 26. Ce carter 26 est relié par des bras rectilignes 28 à un moyeu central 30. Les bras 28 sont régulièrement répartis sur toute la périphérie du moyeu et ils sont raccordés par leurs extrémités extérieures à chacun des sommets du polygone formé en section par le carter 26. On compte donc également seize bras 28 dans le mode de réalisation illustré sur la figure 2.

De façon connue, les bras 28 sont tous inclinés dans le même sens et d'un même angle, par exemple d'environ 15°, par rapport à une direction radiale. Cette caractéristique autorise une dilatation différentielle entre le carter d'échappement 26 et le moyeu 30, sans entraîner de risque de flambage dans les bras 28.

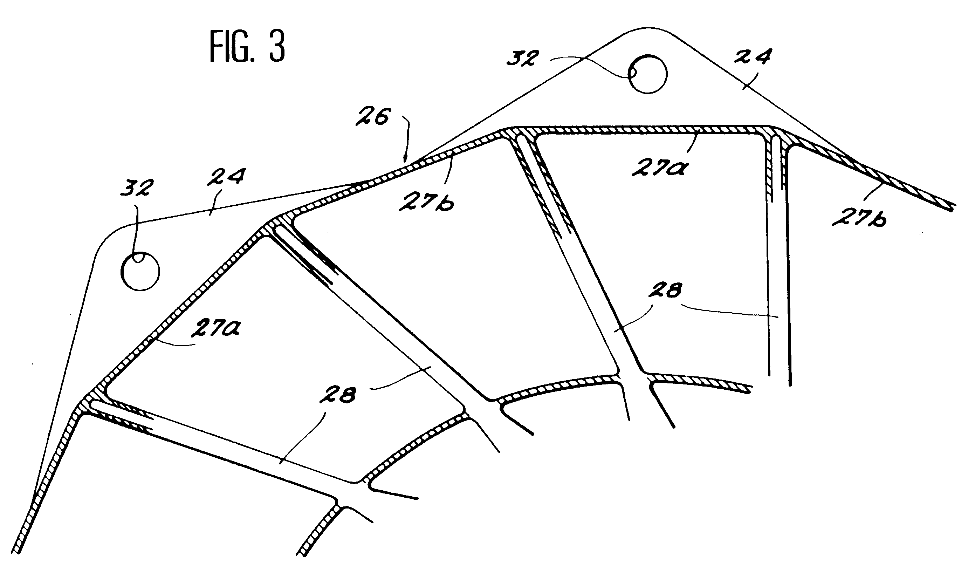

Chacune des trois oreilles d'accrochage 24 qui équipent extérieurement le carter d'échappement 26 comporte un trou de passage 32, de section circulaire, dans lequel peut être reçu un axe (non représenté) servant à monter l'oreille d'accrochage correspondante à l'extrémité inférieure d'une biellette de suspension (non représentée). Les trois oreilles d'accrochage 24 sont placées à la partie supérieure du carter 26 et montées sur trois des plaques planes matérialisant les côtés du polygone régulier formé en section par le carter 26. Ces plaques planes portant les oreilles 24 sont désignées par la référence 27a sur les figures 2 et 3, pour les distinguer des plaques 27b qui ne portent pas d'oreille.

Dans le mode de réalisation représenté sur les figures 2 et 3, les oreilles 24 sont montées sur trois plaques 27a non adjacentes, deux plaques 27a portant deux oreilles d'accrochage 24 consécutives étant séparées par une seule plaque 27b dépourvue d'oreille.

Les trous 32 qui sont formé dans chacune des oreilles 24 sont disposés de telle sorte que leurs axes géométriques soient situés à l'intersection des deux côtés du polygone formé en section par le carter 26, attenants aux côtés portant les oreilles d'accrochage 24 correspondantes. En d'autres termes, l'axe géométrique de chacun des trous 32 se trouve à l'intersection des plans médians des plaques planes 27b adjacentes à la plaque plane 27a portant l'oreille 24 correspondante.

En outre, l'une des oreilles 24 est disposée de telle sorte que l'axe géométrique du trou 32 qui la traverse soit situé dans le plan vertical médian du carter 26, alors que les deux autres oreilles 24 sont disposées symétriquement de part et d'autre de ce plan vertical médian. Les axes géométriques des trous 32 traversant ces deux autres oreilles 24 sont donc situés à 45° de part et d'autre du plan vertical médian précité, lorsque le polygone régulier formé en section par le carter comprend seize côtés.

Le montage des oreilles 24 sur les côtés du polygone formé en section par le carter d'échappement 26, ainsi que la disposition des axes géométriques des trous 32 formés dans ces oreilles à l'intersection des plans médians des plaques planes 27b attenantes à chacune des plaques 27a portant une oreille permettent, conformément à l'invention, de n'engendrer dans les plaques 27b du carter 26 attenantes aux plaques 27a portant les oreilles 24 que des efforts de traction ou de compression et non des efforts de flexion. Par conséquent, l'épaisseur du carter 26 peut être minimisée, de telle sorte que la masse du turboréacteur n'est pas pénalisée par la structure conforme à l'invention.

Par ailleurs, cet agencement des oreilles 24 conforme à l'invention permet d'éviter toute déformation du carter d'échappement 26 à proximité des trous 32 traversant les oreilles 24. Par conséquent, tous les secteurs du carter 26 délimités par deux bras consécutifs 28 ont la même section sur toute la circonférence du carter, que ces secteurs soient ou non adjacents à une oreille d'accrochage 24. Grâce à cet agencement particulier, la continuité de la veine d'écoulement théorique des gaz d'échappement du turboréacteur n'est donc pas perturbée par la présence des oreilles 24.

En outre, l'emplacement des oreilles 24 conforme à l'invention permet de donner à tous les bras 28 exactement la même longueur. La tenue mécanique de l'ensemble lors des dilatations thermiques est donc améliorée par rapport à l'art antérieur.

Bien entendu, l'invention n'est pas limitée au mode de réalisation qui vient d'être décrit à titre d'exemple, mais en couvre toutes les variantes. Ainsi, on comprendra notamment que le nombre d'oreilles d'accrochage équipant le carter d'échappement peut être supérieur à trois, par exemple si on désire prévoir un point d'accrochage supplémentaire afin d'accroître la sécurité.

## Revendications

1. Structure de suspension arrière d'un carter d'échappement (26) de turboréacteur, formant en section un polygone régulier, ladite structure comportant au moins trois oreilles d'accrochage extérieures (24) portées par le carter (26), caractérisée par le fait que chacune des oreilles d'accrochage (24) est portée par un premier côté (27a) du polygone régulier formé en section par le carter (26), et située dans le plan substanciellement défini par les droites portées par deux deuxièmes côtés (27b) du polygone régulier, adjacents à ce premier côté et par ce premier côté.

2. Structure de suspension arrière selon la revendication 1, caractérisée par le fait que, chacune des oreilles d'accrochage (24) comportant un trou de passage (32) d'axe géométrique donné, cet axe géométrique est situé à l'intersection des droites portées par deux deuxièmes côtés (27b) du polygone régulier, adjacents au premier côté (27a) portant l'oreille d'accrochage.

3. Structure de suspension arrière selon l'une quelconque des revendications 1 et 2, caractérisée par le fait que les premiers côtés (27a) du polygone régulier formé en section par le carter, portant des oreilles d'accrochage (24) consécutives, sont séparés par un seul deuxième côté (27b) de ce polygone.

## Claims

1. Rear suspension structure for a turbojet exhaust casing (26), forming, in cross-section, a regular polygon, the said structure including at least three outer fastening lugs (24) carried by the casing (26), characterized in that each of the fastening lugs (24) is carried by a first side (27a) of the regular polygon formed in cross-section by the casing (26) and is situated in the plane substantially defined by the straight lines carried by two second sides (27b) of the regular polygon, adjacent to this first side and by this first side.

2. Rear suspension structure according to Claim 1, characterized in that, with each of the fastening lugs (24) including a through-hole (32) of given geometric axis, this geometric axis is situated at the intersection of the straight lines carried by two second sides (27b) of the regular polygon, adjacent to the first side (27a) carrying the fastening lug.

3. Rear suspension structure according to either one of Claims 1 and 2, characterized in that the first sides (27a) of the regular polygon formed in cross-section by the casing, carrying consecutive fastening lugs (24), are separated by a single second side (27b) of this polygon.

## Patentansprüche

1. Hintere Aufhängungskonstruktion eines Abgasgehäuses (26) einer Turbomaschine, dessen Querschnitt die Form eines regelmäßigen Vielecks bildet, wobei die Konstruktion wenigstens drei äußere Aufhängungsösen (24) aufweist, die durch das Gehäuse (26) getragen sind,
**dadurch gekennzeichnet,**
daß jede der Aufhängungsösen (24) durch eine erste Seite (27a) des regelmäßigen Vielecks getragen ist, das im Querschnitt durch das Gehäuse (26) gebildet ist, und in der Ebene liegt, die im wesentlichen durch die Geraden festgelegt wird, die durch zwei zweite Seiten (27b) des regelmäßigen Vielecks, die an die erste Seite angrenzen, und durch diese erste Seite hervorgehen.

2. Hintere Aufhängungskonstruktion gemäß Anspruch 1,
**dadurch gekennzeichnet,**
daß jede der Aufhängungsösen (24) ein Durchgangsloch (32) mit gegebener geometrischer Achse aufweist, und die geometrische Achse im Schnittpunkt der Geraden liegt, die durch die beiden zweiten Seiten (27b) des regelmäßigen Vielecks hervorgehen, die an die erste Seite (27a) angrenzen, die die Aufhängungsöse trägt.

3. Hintere Aufhängungkonstruktion nach einem der Ansprüche 1 oder 2,
**dadurch gekennzeichnet,**
daß die ersten Seiten (27a) des im Querschnitt durch das Gehäuse gebildeten regelmäßigen Vielecks, die aufeinanderfolgende Aufhängungsösen (24) tragen, durch eine einzige zweite Seite (27b) dieses Vielecks getrennt sind.
